# EUROPÄISCHE PATENTSCHRIFT

(11) **EP 4 126 592 B1**
(45) Veröffentlichungstag und Bekanntmachung des Hinweises auf die Patenterteilung: **02.07.2025**
(21) Anmeldenummer: 21712406.4
(22) Anmeldetag: 09.03.2021
(51) Int. Cl.: B60P 3/39

(54) **HÄNGENDE ABLAGEKONSTRUKTION, INSBESONDERE BETTKONSTRUKTION, FÜR EIN FAHRZEUG**
SUSPENDED SUPPORT STRUCTURE, IN PARTICULAR BED STRUCTURE, FOR A VEHICLE
STRUCTURE DE SUPPORT SUSPENDUE, EN PARTICULIER STRUCTURE DE LIT, POUR UN VÉHICULE

(30) Priorität: 25.03.2020 AT 502482020
(43) Veröffentlichungstag der Anmeldung: 08.02.2023
(73) Patentinhaber: Ressler, Stefan, 8753 Fohnsdorf (AT)
(72) Erfinder: Ressler, Stefan, 8753 Fohnsdorf (AT)
(74) Vertreter: Wirnsberger & Lerchbaum Patentanwälte OG
(86) Internationale Anmeldenummer: PCT/AT2021/060085
(87) Internationale Veröffentlichungsnummer: WO 2021/189088

(56) Entgegenhaltungen:
- EP-A1- 3 006 264
- DE-A1- 102006 044 410
- DE-A1- 2 549 541
- DE-A1- 3 225 758
- US-A- 1 524 525
- US-A1- 2006 130 231

## Beschreibung

Die Erfindung betrifft eine Ablagekonstruktion, insbesondere Bettkonstruktion, für ein Fahrzeug, wie einen Wohnwagen, aufweisend einen Ablagekörper mit einer Ablagefläche zur Ablage von Ladegut oder einer Person auf der Ablagefläche und zumindest einer Hebevorrichtung, mit welcher der Ablagekörper hängend im Fahrzeug relativ zum Fahrzeug in einer Bewegungsrichtung beweglich anordenbar ist.

In einem Fahrzeug, beispielsweise Wohnmobil, angeordnete Bettkonstruktionen bzw. Liegen sind aus dem Stand der Technik bekannt. Um einer Schwierigkeit, dass eine waagrechte Ausrichtung einer Liegefläche der Bettkonstruktion eine ebenfalls waagrechte Positionierung des Fahrzeuges erfordert, zu begegnen, hat es sich bewährt, die Liegefläche mit Gurten hängend im Fahrzeug anzuordnen. Durch Justieren einer Länge der Gurte kann damit unabhängig von einer Positionierung des Fahrzeuges eine waagrechte Ausrichtung der Liegefläche eingestellt werden. Darüber hinaus ist es als vorteilhaft zu sehen, dass die Bettkonstruktion dabei üblicherweise aufgrund deren hängenden Positionierung mit den Gurten in einer Bewegungsrichtung beweglich ist, wodurch vorteilhaft Erschütterungen des Fahrzeuges, beispielsweise während einer Fahrt des Fahrzeuges, in geringerem Maße auf eine auf der Liegefläche liegende Person weitergegeben werden.

Aus der EP 3 006 264 A1 ist eine Ablagekonstruktion offenbart, die eine Befestigungseinrichtung aufweist, mit welcher der Ablagekörper in einer Bewegungsrichtung an einer Fahrzeuginnenwand des Fahrzeuges befestigbar ist.

Hier setzt die Erfindung an. Aufgabe der Erfindung ist es, eine Ablagekonstruktion, insbesondere Bettkonstruktion, der eingangs genannten Art anzugeben, welche eine hohe Praktikabilität aufweist.

Die Aufgabe wird erfindungsgemäß durch eine Ablagekonstruktion mit den Merkmale des Patentanspruchs 1 gelöst.

Hängende Ablagekonstruktionen, insbesondere wenn diese als Bettkonstruktionen ausgebildet sind, sind üblicherweise mit dem Ärgernis verbunden, dass die vorteilhafte Beweglichkeit des Ablagekörpers eine Benutzung bei einem Beladen bzw. Entladen der Ablagefläche des Ablagekörpers erschwert. Bei einer Ausbildung bzw. Nutzung der Ablagekonstruktion als Liegefläche für eine Person hat sich gezeigt, dass die Beweglichkeit des Ablagekörpers ein körperliches Unwohlsein, insbesondere in Form von Übelkeit, der Person bewirken kann. Weiter ist nachteilig zu sehen, dass je nach Anordnung des Ablagekörpers im Fahrzeug, insbesondere während einer Fahrt des Fahrzeuges, Bewegungen, insbesondere Schwingungsbewegungen, des Ablagekörpers entstehen können, durch welche der Ablagekörper gegen eine Fahrzeuginnenwand gestoßen wird, sodass Beschädigungen des Ablagekörpers bzw. der Fahrzeuginnenwand entstehen können. Mit einer erfindungsgemäßen Befestigungsvorrichtung können diese Ärgernisse und Schwierigkeiten gelöst oder zumindest verringert werden.

Der Ablagekörper ist in der Regel als Ablageplattform ausgebildet. Wenn der Ablagekörper als Bettkonstruktion bzw. Bett ausgebildet ist bzw. genutzt werden soll, kann die Ablagefläche des Ablagekörpers mit einem bzw. als Lattenrost oder mit einer Matratze, welche insbesondere auf einem Lattenrost des Ablagekörpers angeordnet ist, gebildet sein.

Indem vorgesehen ist, dass der Ablagekörper im Einsatzzustand mit der Befestigungseinrichtung in Bewegungsrichtung an einer Fahrzeuginnenwand des Fahrzeuges befestigbar, vorzugsweise an die Fahrzeuginnenwand spannbar, ist, kann eine Beweglichkeit des Ablagekörpers in bzw. entgegen der Bewegungsrichtung auf praktikable Weise eingeschränkt werden, ohne vorteilhafte Wirkungen einer hängenden Anordnung des Ablagekörpers im Fahrzeug zu unterminieren. Je nach Anwendungsbedingungen kann es dabei günstig sein, wenn der Ablagekörper mit der Befestigungseinrichtung derart an der Fahrzeuginnenwand befestigbar ist, dass eine Bewegung des Ablagekörpers in bzw. entgegen der Bewegungsrichtung nur noch eingeschränkt ermöglicht oder gänzlich unterbunden ist.

Mit Vorteil ist vorgesehen, dass die Befestigungseinrichtung ausgebildet ist, den Ablagekörper mit bzw. durch Pressen, Spannen, Spreizen und/oder Drücken des Ablagekörpers gegen die Fahrzeuginnenwand an der Fahrzeuginnenwand zu befestigen. Hierzu kann die Befestigungseinrichtung zumindest ein Befestigungsmittel aufweisen, mit welchem eine Zugkraft und/oder Druckkraft auf den Ablagekörper, insbesondere einstellbar, ausübbar ist, um den Ablagekörper auf vorgenannte Weise an der Fahrzeuginnenwand zu befestigen. Praktisch ist es, wenn die Befestigungseinrichtung einen mit dem Befestigungsmittel gekoppelten Befestigungsmittelantrieb aufweist, um das Befestigungsmittel anzutreiben. Der Befestigungsmittelantrieb kann als mechanischer, pneumatischer, hydraulischer und/oder elektrischer Antrieb ausgebildet sein. Üblicherweise weist die Befestigungseinrichtung eine Befestigungsmittelsteuereinheit auf, mit welcher der Befestigungsmittelantrieb steuerbar ist. Die Befestigungsmittelsteuereinheit ist in der Regel am Ablagekörper, vorzugsweise zumindest teilweise versenkt im Ablagekörper, angeordnet. Üblicherweise weist die Befestigungsmittelsteuereinheit zumindest ein Bedienelement auf, welches von einem Benutzer betätigbar ist, um die Befestigungsmittelsteuereinheit zu steuern.

Für eine hohe Robustheit und einfache Handhabbarkeit hat es sich bewährt, wenn die Befestigungseinrichtung ein Zugmittel aufweist, um den Ablagekörper mit dem Zugmittel an die Fahrzeuginnenwand zu spannen. Das Zugmittel kann beispielsweise als bzw. mit einem Seil, einer Kette, einem Gurt und/oder einer Stange ausgebildet sein. Die Befestigungseinrichtung kann auch mehrere solche Zugmittel aufweisen. Üblicherweise ist das Befestigungsmittel mit dem oder durch das Zugmittel gebildet.

Eine hohe Praktikabilität ist erreichbar, wenn die Befestigungseinrichtung eine Zugmitteleinstellvorrichtung aufweist, mit welcher eine Einsatzlänge des Zugmittels, insbesondere in einem Befestigungszustand, variierbar bzw. einstellbar ist, um den Ablagekörper mit dem Zugmittel an die Fahrzeuginnenwand zu spannen. Für eine einfache Handhabung ist es hierzu günstig, wenn die Zugmitteleinstellvorrichtung einen mit dem Zugmittel gekoppelten Zugmittelantrieb aufweist, um eine Einsatzlänge des Zugmittels zu ändern. Der Zugmittelantrieb kann als mechanischer, pneumatischer, hydraulischer und/oder elektrischer Antrieb ausgebildet sein. Bewährt hat es sich, wenn die Zugmitteleinstellvorrichtung eine Zugmittelwinde aufweist, mit welcher das Zugmittel reversibel aufwickelbar bzw. abwickelbar ist, um die Einsatzlänge des Zugmittels zu ändern. Alternativ oder kumulativ ist es für einen einfachen Aufbau günstig, wenn die Zugmitteleinstellvorrichtung einen in einer Bolzenführung gelagerten, relativ zur Bolzenführung bewegbaren Zugmittelbolzen aufweist, wobei der Zugmittelbolzen mit dem Zugmittel gekoppelt ist, sodass durch Bewegen des Zugmittelbolzens relativ zur Bolzenführung eine Einsatzlänge des Zugmittels variierbar bzw. einstellbar ist. Insbesondere ist dadurch auf einfache Weise im Befestigungszustand eine Zugspannung des Zugmittels änderbar bzw. einstellbar. Praktisch ist es, wenn die Zugmitteleinstellvorrichtung eine Arretierungseinrichtung aufweist, um den Zugmittelbolzen in unterschiedlichen Positionen relativ zur Bolzenführung formschlüssig und/oder kraftschlüssig zu arretieren. Dadurch ist eine eingestellte Einsatzlänge des Zugmittels festlegbar. Ein robuster Aufbau ist erreichbar, wenn die Arretierungseinrichtung mit einem mit dem Zugmittelbolzen bzw. der Bolzenführung verbundenen Einraststück gebildet ist, welches Einraststück formschlüssig an unterschiedlichen Einrastpositionen an der Bolzenführung bzw. dem Zugmittelbolzen einrastbar ist, um den Zugmittelbolzen relativ zur Bolzenführung zu arretieren. Zweckmäßig ist es, wenn die Bolzenführung bzw. der Zugmittelbolzen zum Einraststück korrespondierende Rasten aufweist, in welche das Einraststück formschlüssig einfügbar ist, sodass eine relative Position zwischen dem Zugmittelbolzen und der Bolzenführung festgelegt ist. Eine einfache Handhabbarkeit ist erreichbar, wenn die Zugmitteleinstellvorrichtung mit einem Bediengriff, aufweisend zwei voneinander beabstandete, relativ zueinander bewegbare Bediengriffhebel, gebildet ist, welche derart ausgebildet und mit dem Zugmittelbolzen sowie der Bolzenführung gekoppelt sind, dass im Einsatzzustand bzw. Befestigungszustand mit einem Zusammenpressen der Bediengriffhebel durch einen Benutzer eine relative Position zwischen dem Zugmittelbolzen und der Bolzenführung variierbar bzw. einstellbar ist. Zweckmäßig ist es, wenn der Zugmittelantrieb ausgebildet ist, die Zugmittelwinde bzw. den Zugmittelbolzen anzutreiben. Um ein Spannen des Zugmittels zu erleichtern, ist es günstig, wenn die Zugmitteleinstellvorrichtung eine Übersetzungsvorrichtung zur Übersetzung einer auf das Zugmittel mit dem Zugmittelantrieb aufgebrachten Kraft aufweist, beispielsweise ein Getriebe oder einen Flaschenzug. Üblicherweise weist die Zugmitteleinstellvorrichtung eine Zugmitteleinstellsteuereinheit auf, mit welcher der Zugmittelantrieb steuerbar ist. Die Zugmitteleinstellsteuereinheit ist in der Regel am Ablagekörper, vorzugsweise zumindest teilweise versenkt im Ablagekörper, angeordnet. Üblicherweise weist die Zugmitteleinstellsteuereinheit zumindest ein Bedienelement auf, welches von einem Benutzer betätigbar ist, um die Zugmitteleinstellsteuereinheit zu steuern.

Befestigungszustand bezeichnet üblicherweise einen Zustand, in welchem der Ablagekörper mit der Befestigungseinrichtung bzw. dem Zugmittel an der Fahrzeuginnenwand befestigt ist bzw. an diese gespannt ist.

Üblicherweise ist vorgesehen, dass die Ablagekonstruktion eine Hebevorrichtung aufweist, um den Ablagekörper hängend im Fahrzeug anzuordnen, sodass Ladegut, beispielsweise Gepäck, bzw. eine oder mehrere Personen auf der Ablagefläche des Ablagekörpers anordenbar bzw. ablegbar sind. Hierzu ist die Hebevorrichtung meist mit zumindest einem Hebemittel, wie beispielsweise einem Seil, einer Kette und/oder einem Gurt ausgebildet. In der Regel weist die Hebevorrichtung mehrere Hebemittel auf, um den Ablagekörper mit den Hebemitteln hängend anzuordnen. Für eine hohe Stabilität ist es dabei günstig, wenn die mehreren Hebemittel beabstandet voneinander, bevorzugt an gegenüberliegenden Seiten des Ablagekörpers, am Ablagekörper angeordnet sind bzw. angreifen. Bewährt hat es sich, wenn die mehreren Hebemittel einander gegenüberliegend in Bezug auf eine Symmetrieachse und/oder Hauptträgheitsachse des Ablagekörpers am Ablagekörper angreifen. Ein einfacher Aufbau ist erreichbar, wenn das zumindest eine Hebemittel eine Gurtschlaufe bildet, wobei der Ablagekörper in der Gurtschlaufe, insbesondere gleitend geführt, eingehängt ist. Hierzu kann der Ablagekörper eine oder mehrere Umlenkführungen aufweisen, um das Hebemittel gleitend zu führen. Der Aufbau ist besonders robust, wenn die Gurtschlaufe über in Bezug auf eine Symmetrieachse und/oder Hauptträgheitsachse des Ablagekörpers einander gegenüberliegenden Angriffspunkten am Ablagekörper, an welchen das Hebemittel am Ablagekörper angreift bzw. diesen stützt, geführt ist. Zweckmäßig kann der Ablagekörper hierzu an einander gegenüberliegenden Seiten des Ablagekörpers und/oder in Bezug auf die Symmetrieachse bzw. Hauptträgheitsachse des Ablagekörpers einander gegenüberliegend mehrere Umlenkführungen aufweisen, über welche das Hebemittel geführt ist.

In der Regel ist vorgesehen, dass die Hebevorrichtung ein oder mehrere Montageelemente aufweist, mit welchen die Hebevorrichtung an einer Fahrzeuginnenwand bzw. Fahrzeuginnendecke fixierbar ist, um den Ablagekörper an der Fahrzeuginnenwand bzw. Fahrzeuginnendecke aufzuhängen.

Einsatzzustand bezeichnet zweckmäßig einen Zustand, in welchem der Ablagekörper mit der Hebevorrichtung hängend angeordnet ist. Bewegungsrichtung bezeichnet üblicherweise eine Richtung, in welcher der Ablagekörper im Einsatzzustand mit der Hebevorrichtung definiert beweglich ist bzw. bewegt werden kann. Die Bewegungsrichtung stellt üblicherweise eine Schwenkrichtung dar, in welche der Ablagekörper im Einsatzzustand schwenkbar ist.

In der Regel ist vorgesehen, dass der Ablagekörper derart mit der Hebevorrichtung hängend anordenbar ist, dass die Ablagefläche im Wesentlichen horizontal, ausgerichtet ist. Dadurch ist eine stabile Positionierung des Ablagekörpers bei gleichzeitiger Ablage von Ladegut und/oder einer Person auf der Ablagefläche auf einfache Weise umsetzbar.

Eine hohe Einsatzfähigkeit ist erreichbar, wenn der Ablagekörper im Einsatzzustand mit der Hebevorrichtung reversibel höhenverstellbar ist. Auf diese Weise kann eine Position bzw. Beabstandung des Ablagekörpers bzw. dessen Ablagefläche relativ zu einer Bodenfläche des Fahrzeuges je nach Bedarf und/oder Größe eines auf der Ablagefläche anzuordnenden Ladegutes eingestellt werden bzw. der Ablagekörper je nach Anwendungsbedingungen stauraumoptimiert im Fahrzeug positioniert werden. Zweckmäßig ist es entsprechend, wenn der Ablagekörper mit der Hebevorrichtung reversibel absenkbar bzw. anhebbar ist. Eine einfache Umsetzbarkeit ist erreichbar, wenn eine Einsatzlänge des zumindest einen Hebemittels, insbesondere mehrerer oder sämtlicher Hebemittel, variierbar, insbesondere einstellbar ist, um den Ablagekörper höhenzuverstellen, insbesondere abzusenken bzw. anzuheben. Einsatzlänge des Hebemittels bezeichnet dabei üblicherweise eine im Einsatzzustand genutzte bzw. effektive Länge des Hebemittels zwischen einer Stelle des Hebemittels, an welcher das Hebemittel am Ablagekörper angreift, und einer Stelle des Hebemittels, welche an einem Lagerpunkt angeordnet ist, an dem der Ablagekörper mit dem Hebemittel aufgehängt ist. Günstig ist es hierzu, wenn die Einsatzlängen der Hebemittel zeitparallel variierbar, insbesondere einstellbar, sind. Zweckmäßig kann eine Hebevorrichtungssteuereinheit vorhanden sein, mit welcher die Einsatzlänge(n) des bzw. der Hebemittel steuerbar einstellbar sind.

Bewährt hat es sich, wenn die Hebevorrichtung zumindest eine Hebemittelwinde aufweist, um das zumindest eine Hebemittel zu betätigen, sodass dessen Einsatzlänge variierbar bzw. einstellbar ist. Ein einfacher Aufbau ist erreichbar, wenn die Hebemittelwinde ausgebildet ist, mehrere oder sämtliche Hebemittel, insbesondere zeitparallel, zu betätigen, um deren Einsatzlängen zu variieren. Es kann auch vorgesehen sein, dass die Hebevorrichtung mehrere Hebemittelwinden aufweist, wobei unterschiedliche Hebemittelwinden jeweils andere Hebemittel betätigen. Zweckmäßig kann die Hebemittelwinde eine oder mehrere Trommeln aufweisen, mit welchen das bzw. die Hebemittel reversibel aufwickelbar bzw. abwickelbar sind, um deren Einsatzlängen zu variieren. Die Hebemittelwinde kann einen Hebemittelwindenantrieb für einen Betrieb der Hebemittelwinde aufweisen. Der Hebemittelwindenantrieb ist meist mit einem manuellen Antrieb und/oder einem Motor, insbesondere Elektromotor, für einen Betrieb der Hebemittelwinde gebildet, um das bzw. die Hebemittel zu betätigen bzw. deren Einsatzlängen zu variieren. Die Hebevorrichtungssteuereinheit ist dann üblicherweise ausgebildet, die zumindest eine Hebemittelwinde bzw. den Hebemittelwindenantrieb zu steuern, insbesondere zu regeln. Auf diese Weise kann die Einsatzlänge der Hebemittel mit der Hebevorrichtungssteuereinheit einsatzpraktikabel eingestellt werden.

Für einen robusten Aufbau ist es zweckmäßig, wenn die Hebemittelwinde am Ablagekörper angeordnet ist. Bevorzugt ist dabei die Hebemittelwinde, insbesondere deren Trommel, zumindest teilweise, vorzugsweise gänzlich, innerhalb des Ablagekörpers oder in den Ablagekörper versenkt am Ablagekörper angeordnet. Ein einfacher Aufbau ist erreichbar, wenn die Trommel der Hebemittelwinde derart entlang des Ablagekörpers und/oder durch den Ablagekörper verläuft, dass mehrere an unterschiedlichen Positionen bzw. Angriffspunkten am Ablagekörper angreifende Hebemittel mit der Trommel aufwickelbar bzw. abwickelbar sind. Für eine ausgeprägte Stabilität ist es günstig, wenn die Trommel im Wesentlichen entlang einer Längsachse, insbesondere Symmetrieachse oder Hauptträgheitsachse, des Ablagekörpers verläuft.

Üblicherweise ist vorgesehen, dass im Einsatzzustand der Ablagekörper mit der Hebevorrichtung zwischen mehreren Ablagepositionen, in welchen Ladegut oder eine Person auf der Ablagefläche anordenbar ist, höhenverstellbar bzw. absenkbar und/oder anhebbar ist. Dadurch kann ein Stauraum des Fahrzeuges einsatzoptimiert genutzt werden. Hierbei ist in der Regel vorgesehen, dass die Ablagefläche im Einsatzzustand im Wesentlichen horizontal ausgerichtet ist, um Ladegut und/oder eine Person auf der Ablagefläche anzuordnen. Zweckmäßig ist es, wenn die Hebevorrichtung derart ausgebildet und/oder steuerbar ist, dass eine Winkelstellung bzw. Neigung der Ablagefläche während eines Höhenverstellens bzw. Absenkens und/oder Anhebens des Ablagekörpers erhalten bleibt bzw. sich nicht ändert. Damit ist die Ablagefläche also während des Höhenverstellens bzw. Absenkens oder Anhebens des Ablagekörpers parallel verschiebbar bzw. anhebbar oder absenkbar. Dadurch kann das Höhenverstellen des Ablagekörpers zwischen mehrere Ablagepositionen durchgeführt werden, ohne eine Stabilität einer Lagerung von auf der Ablagefläche angeordnetem Ladegut bzw. einer auf dieser angeordneten Person zu gefährden. Es versteht sich, dass ein Höhenverstellen bzw. Absenken und/oder Anheben des Ablagekörpers mit der Hebevorrichtung üblicherweise relativ zu einem Aufhängpunkt, insbesondere einem positionsfesten Aufhängpunkt am Fahrzeug, an welchem der Ablagekörper mit der Hebevorrichtung aufgehängt ist, bzw. relativ zum Fahrzeug zu sehen ist.

Eine hohe Praktikabilität ist erreichbar, wenn die Hebevorrichtung ausgebildet ist, im Einsatzzustand den Ablagekörper um zumindest eine Kippachse, insbesondere in einer Kipprichtung orthogonal zur Bewegungsrichtung, zu kippen. Dadurch kann der Ablagekörper in einen Nichtgebrauchszustand, in welchem der Ablagekörper nicht zur Ablage von Ladegut bzw. Personen genutzt wird, überführt und platzsparend im Fahrzeug angeordnet werden. Günstig ist es, wenn die Hebevorrichtung ausgebildet ist, den Ablagekörper derart zu kippen, dass die Ablagefläche im Wesentlichen vertikal ausgerichtet ist. Dadurch ist der Ablagekörper in einem Nichtgebrauchszustand platzsparend anordenbar. Auf einfache Weise ist dies umsetzbar, wenn die Hebevorrichtung ausgebildet ist, Einsatzlängen von unterschiedlichen Hebemitteln separat voneinander zu variieren bzw. einzustellen, um für ein Kippen des Ablagekörpers die Einsatzlängen unterschiedlich groß zu ändern. Hierzu ist es zweckmäßig, wenn mehrere vorgenannte Hebemittelwinden vorgesehen sind, um die Hebemittel separat voneinander zu betätigen. Eine besonders hohe Einsatzfähigkeit ist erreichbar, wenn die Einsatzlängen sämtlicher Hebemittel separat voneinander einstellbar sind. Für eine besonders hohe Einsatzfähigkeit ist es entsprechend günstig, wenn der Ablagekörper mit der Hebevorrichtung höhenverstellbar und kippbar ist. Mit Vorteil ist vorgesehen, dass die Hebevorrichtung ausgebildet ist, im Einsatzzustand eine Neigung der Ablagefläche zu variieren bzw. einzustellen, bevorzugt derart das die Ablagefläche im Wesentlichen horizontal ausgerichtet ist. Auf diese Weise kann eine Neigung des Fahrzeuges, in welchem die Ablagekonstruktion angeordnet ist, ausgeglichen werden. Zweckmäßig ist es hierzu, wenn Einsatzlängen der Hebemittel separat voneinander, insbesondere auf vorgenannte Weise, variierbar bzw. einstellbar sind, um die Neigung der Ablagefläche einzustellen. Günstig ist es, wenn die Hebevorrichtung ausgebildet ist, die Neigung bzw. eine Ausrichtung der Ablagefläche konstant zu halten. Zweckmäßig kann die Hebevorrichtungssteuereinheit ausgebildet sein, die Neigung der Ablagefläche bzw. Einsatzlängen der Hebemitteln derart, bevorzugt selbsttätig, zu steuern bzw. zu regeln, dass eine Ausrichtung der Ablagefläche konstant, bevorzugt horizontal, erhalten bleibt. Dadurch bleibt eine Ausrichtung der Ablagefläche bei Änderung einer Neigung des Fahrzeuges erhalten. Hierzu kann ein Sensor zur Messung einer Ausrichtung der Ablagefläche vorhanden sein.

Vorteilhaft ist es, wenn die Hebevorrichtung derart ausgebildet ist, dass im Einsatzzustand eine Aufhängung des Ablagekörpers mit einem Teil der Hebemittel bzw. einzelnen Hebemitteln reversibel lösbar ist, um den Ablagekörper in einen Nichtgebrauchszustand zu kippen. Vorzugsweise ist der Ablagekörper dadurch in einen Nichtgebrauchszustand kippbar, in welchem der Ablagekörper nur noch einseitig mit Hebemitteln aufgehängt ist bzw. die Ablagefläche im Wesentlichen vertikal ausgerichtet ist. Auf diese Weise kann der Ablagekörper besonders einfach in den Nichtgebrauchszustand des Ablagekörpers überführt werden. Zweckmäßig kann die Hebevorrichtung hierzu ein oder mehrere Verbindungsverschlüsse aufweisen, welche mehrere Teile der Hebevorrichtung bzw. die Hebevorrichtung mit dem Ablagekörper lösbar miteinander verbinden. Bewährt hat es sich, wenn Verbindungsverschlüsse vorgesehen sind, welche mehrere Hebemittelsegmente miteinander und/oder ein oder mehrere Hebemittel mit dem Ablagekörper und/oder ein oder mehrere Hebemittel mit einem Lagerpunkt, an welchem der Ablagekörper mit den Hebemitteln aufgehängt ist, lösbar verbinden. Auf diese Weise kann der Ablagekörper durch Lösen von einem oder mehreren Verbindungsverschlüssen in den Nichtgebrauchszustand überführt werden. Der Ablagekörper ist dadurch im Nichtgebrauchszustand besonders platzsparend anordenbar und vorzugweise an der Fahrzeuginnenwand, insbesondere mit der Befestigungseinrichtung, befestigbar.Von Vorteil ist es, wenn die Befestigungseinrichtung zumindest ein Federelement aufweist, um den Ablagekörper mit einer Federkraft des Federelementes belastet an der Fahrzeuginnenwand zu befestigen bzw. an die Fahrzeuginnenwand zu spannen, sodass eine Bewegung des Ablagekörpers in Bewegungsrichtung entgegen der Federkraft begrenzt ermöglicht ist. Auf diese Weise ist eine Bewegung des Ablagekörpers in Bewegungsrichtung unter Vermeidung bzw. Minderung von Druckspitzen einschränkbar. Insbesondere können dadurch Stoßkräfte, insbesondere Stoßkraftspitzen, zwischen dem Ablagekörper und der Fahrzeuginnenwand gedämpft werden, sodass auf der Ablagefläche angeordnetes Ladegut und/oder eine auf der Ablagefläche angeordnete Person geschützt wird. Dies gilt besonders während einer Fahrt des Fahrzeuges. Dies kann praktikabel umgesetzt sein, indem das Zugmittel, insbesondere im Befestigungszustand, mit der Federkraft des Federelementes beaufschlagt bzw. belastet ist. Praktikabel ist es, wenn ein erstes Befestigungsende des Federelementes am Ablagekörper angeordnet ist und das Zugmittel an einem relativ zum ersten Befestigungsende entgegen der Federkraft des Federelementes auslenkbaren zweiten Befestigungsende des Federelementes angeordnet ist, um das Zugmittel im Befestigungszustand mit der Federkraft zu beaufschlagen. Zweckmäßig kann die Befestigungseinrichtung mehrere Federelemente aufweisen. Für eine hohe Robustheit hat es sich bewährt, wenn das Federelement mit einer bzw. als Schraubenfeder ausgebildet ist.

Um eine Geräuschentwicklung bei einem Spannen bzw. Zusammenziehen des mit einer Schraubenfeder gebildeten Federelementes zu reduzieren, hat es sich als vorteilhaft erwiesen, wenn zwischen Windungen der Schraubenfeder Trennstücke angeordnet sind, um zu verhindern, dass unmittelbar benachbarte Windungen aneinanderstoßen. Üblicherweise sind die Trennstücke hierzu zwischen unmittelbar benachbarten Windungen bzw. Windungsabschnitten dieser angeordnet oder ragen zumindest teilweise zwischen diese. Je nach konkreter Ausprägung der Schraubenfeder kann es ausreichend sein, wenn lediglich zwischen einer Teilmenge der Windungen Trennstücke vorhanden sind. Es hat sich gezeigt, dass bereits eine erhebliche Geräuschminderung erreichbar ist, wenn mehr als einem Drittel, insbesondere mehr als der Hälfte, der Windungen ein Trennstück auf vorgenannte Weise zugeordnet ist. Eine besonders geräuscharme Bedienung ist erreichbar, wenn mehr als zwei Drittel, insbesondere im Wesentlichen sämtlichen, der Windungen ein Trennstück auf vorgenannte Weise zugeordnet ist. Eine hohe Robustheit ist erreichbar, wenn die Trennstücke, insbesondere monolithisch, als Teil eines Trennelementes ausgebildet sind, welches an der Schraubenfeder angeordnet ist. Üblicherweise sind die Trennstücke mit bzw. aus Kunststoff, insbesondere Gummi, gebildet. Praktikabel ist es, wenn das Trennelement mit einem Schlauch gebildet ist, welcher entlang einer Längsrichtung bzw. Spannrichtung der Schraubenfeder über mehrere, insbesondere sämtliche, Windungen gestülpt ist. Auf diese Weise ist die Schraubenfeder bzw. deren Windungen vor Verschmutzungen schützbar, welche insbesondere außerdem eine Geräuschentwicklung verstärken können. Günstig ist es, wenn der Schlauch derart über die Windungen gestülpt ist, dass der Schlauch bei einem Spannen der Schraubenfeder zwischen den Windungen entstehende Spalte abdeckt. Auf diese Weise ist ein Eindringen von Verschmutzungen zwischen die Windungen vermeidbar. Üblicherweise bildet der Schlauch in einem Längsquerschnitt der Schraubenfeder eine Hüllkurve entlang einer Außenkontur der Schraubenfeder. Eine hohe Robustheit ist erreichbar, wenn die Trennelemente mit Falten des Schlauches oder mit einer oder mehreren von einer Wand des Schlauches abragendenden Erhebungen, welche zwischen die Windungen ragen, gebildet sind. Für eine geringe Geräuschentwicklung und einen geringen Verschleiß ist es günstig, wenn die Schraubfeder derart innerhalb des Schlauches angeordnet ist, dass bei einem Spannen der Schraubenfeder die Windungen relativ zum Schlauch bewegt werden. Ein einfacher und widerstandsfähiger Aufbau ist erreichbar, wenn das Trennelement, insbesondere der Schlauch, mit einem oder mehreren Kunststoffstreifen gebildet ist, welche insbesondere auf die Schraubenfeder aufgewickelt sind. Der Schlauch kann im Wesentlichen eine Gestalt eines Zylinders oder einer Helix aufweisen. Eine einfache Umsetzung ist erreichbar, indem auf die Schraubenfeder in einem gespannten Zustand der Schraubenfeder zumindest ein Kunststoffstreifen angeordnet wird, insbesondere auf die Schraubenfeder aufgewickelt wird, sodass bei einem anschließenden Entspannen der Schraubenfeder mit dem Kunststoffstreifen gebildete Falten zwischen die Windungen der Schraubenfeder ragen, um ein Zusammenstoßen bzw. Kontaktieren der Windungen zu verhindern.

Eine hohe Einsatzfähigkeit ist erreichbar, wenn die Befestigungseinrichtung eine Bedienvorrichtung aufweist, mit welcher die Federkraft, insbesondere in einem Befestigungszustand, in welchem der Ablagekörpers mit der Befestigungseinrichtung an die Fahrzeuginnenwand gespannt ist, einstellbar ist. Auf diese Weise kann die auf den Ablagekörper wirkende Federkraft je nach Anwendungssituation, insbesondere abhängig von einem Gewicht eines auf der Abladefläche angeordneten Ladegutes oder auf dieser angeordneten Person, eingestellt werden. Damit kann beispielsweise während einer Fahrt des Fahrzeuges eine andere Federkraft eingestellt werden als in einem nicht bewegten Zustand des Fahrzeuges. Eine praktikable Umsetzung ist erreichbar, wenn mit der Bedienvorrichtung eine Auslenkung des Federelementes änderbar ist, um die Federkraft einzustellen. Für eine einfache Handhabung ist es günstig, wenn die Bedienvorrichtung einen mit dem Federelement gekoppelten bzw. koppelbaren Bedienvorrichtungsantrieb aufweist, um eine Auslenkung des Federelementes zu ändern bzw. einzustellen. Der Bedienvorrichtungsantrieb kann als mechanischer Antrieb, pneumatischer, hydraulischer und/oder elektrischer Antrieb ausgebildet sein. Ein robuster Aufbau ist erreichbar, wenn der Bedienvorrichtungsantrieb mit einem Koppelmittel, insbesondere einem Koppelseil, mit dem Federelement gekoppelt ist, wobei mit dem Bedienvorrichtungsantrieb eine Zugspannung des Koppelmittels änderbar ist, um die Auslenkung des Federelementes einzustellen. Bewährt hat es sich, wenn die Bedienvorrichtung eine Bedienvorrichtungswinde aufweist, mit welcher das Koppelmittel bzw. Koppelseil reversibel aufwickelbar ist, um eine Zugspannung des Koppelmittels zu ändern. Zweckmäßig ist es dann, wenn der Bedienvorrichtungsantrieb ausgebildet ist, die Bedienvorrichtungswinde anzutreiben. Um ein Auslenken des Federelementes zu erleichtern ist es günstig, wenn die Bedienvorrichtung eine Übersetzungsvorrichtung zur Übersetzung einer auf das Koppelmittel mit dem Bedienvorrichtungsantrieb aufgebrachten Kraft aufweist, beispielsweise ein Getriebe oder einen Flaschenzug. Üblicherweise weist die Bedienvorrichtung eine Bedienvorrichtungssteuereinheit auf, mit welcher der Bedienvorrichtungsantrieb steuerbar ist. Die Bedienvorrichtungssteuereinheit ist in der Regel am Ablagekörper, vorzugsweise zumindest teilweise versenkt im Ablagekörper, angeordnet. Üblicherweise weist die Bedienvorrichtungssteuereinheit zumindest ein Bedienelement auf, welches von einem Benutzer betätigbar ist, um die Bedienvorrichtungssteuereinheit zu steuern.

Ein einfacher Aufbau ist erreichbar, wenn das Koppelmittel mit dem bzw. durch das Zugmittel gebildet ist. Eine praktikable Umsetzung ist erreichbar, wenn die Bedienvorrichtung ausgebildet ist, im Befestigungszustand eine Zugspannung des Zugmittels einzustellen, um die Auslenkung des Federelementes zu ändern. Hierzu kann vorgesehen sein, dass das zweite Befestigungsende des Federelementes ein Umlenkelement, beispielsweise eine Umlenkrolle, aufweist, wobei das Zugmittel mit dem Umlenkelement gleitend geführt am zweiten Befestigungsende des Federelementes angeordnet und weiter zur Bedieneinrichtung, insbesondere der Bedienvorrichtungswinde, geführt ist, sodass im Befestigungszustand mit der Bedieneinrichtung bzw. Bedienvorrichtungswinde eine Zugspannung des Zugseiles änderbar bzw. einstellbar ist. Auf diese Weise ist insbesondere eine anwendungsangepasste Ausgestaltung erreichbar, da die Bedienvorrichtung flexibel an unterschiedlichen Positionen am Ablagekörper anordenbar ist, ohne eine Funktionalität des Federelementes bzw. der Bedienvorrichtung zu beeinträchtigen. Entsprechend vorgenannter Ausführungen ist es dann zweckmäßig, wenn der Bedienvorrichtungsantrieb über das Zugmittel mit dem Federelement gekoppelt ist, wobei mit dem Bedienvorrichtungsantrieb eine Zugspannung des Zugmittels änderbar ist, um die Auslenkung des Federelementes einzustellen. Günstig ist es entsprechend, wenn das Zugmittel mit der Bedienvorrichtungswinde reversibel aufwickelbar ist, um eine Zugspannung des Zugmittels zu ändern. Es versteht sich, dass die weiteren vorgenannten Ausgestaltungsmerkmale der Bedienvorrichtung dann analog für das das Koppelmittel bildende Zugmittel gelten. Insbesondere kann etwa die Übersetzungseinrichtung zur Übersetzung einer auf das Zugmittel mit der Antriebsvorrichtung aufgebrachten Kraft ausgebildet sein. Im Besonderen kann die Bedienvorrichtung mit bzw. durch die Zugmittelverstellvorrichtung, insbesondere der Bedienvorrichtungsantrieb durch den Zugmittelantrieb und/oder die Bedienvorrichtungswinde durch die Zugmittelwinde und/oder die Zugmitteleinstellsteuereinheit durch die Bedienvorrichtungseinheit, gebildet sein.

Es hat sich bewährt, wenn die Befestigungseinrichtung, insbesondere das Zugmittel, derart ausgebildet ist, dass der Ablagekörper unter Bildung eines Formschlusses und/oder Kraftschlusses an der Fahrzeuginnenwand, insbesondere lösbar, befestigbar ist. Zweckmäßig weist das Zugmittel hierzu üblicherweise, insbesondere an einem Zugmittelende des Zugmittels, ein Befestigungselement auf, mit welchem das Zugmittel formschlüssig und/oder kraftschlüssig an der Fahrzeuginnenwand befestigbar ist. Günstig ist es, wenn ein Befestigungsverschluss, insbesondere in Form eines Schnellverschlusses, vorhanden ist, um das Zugmittel formschlüssig und/oder kraftschlüssig, vorzugsweise lösbar, an der Fahrzeuginnenwand zu befestigen. Eine einfache Handhabbarkeit ist erreichbar, wenn der Befestigungsverschluss als Schnellverschluss ausgebildet ist. Ein Schnellverschluss ermöglicht es, eine Verbindung schnell und ohne Werkzeug zu lösen bzw. zu schließen. Günstig ist es, wenn der Schnellverschluss als Schnappverschluss ausgebildet ist. Dabei ist üblicherweise vorgesehen, dass eine formschlüssige und/oder kraftschlüssige Verbindung zwischen dem Zugmittel und der Fahrzeuginnenwand herstellbar ist, indem ein Schnappelement elastisch verformt wird und anschließend einen Formschluss und/oder Kraftschluss bewirkt. In der Regel ist der Formschluss bzw. Kraftschluss durch abermaliges elastisches Verformen des Schnappelementes wieder aufhebbar.

Der Befestigungsverschluss ist auf einfache Weise umsetzbar, wenn das Zugmittel ein erstes Befestigungselement aufweist, welches formschlüssig und/oder kraftschlüssig mit einem an der Fahrzeuginnenwand angeordneten zum ersten Befestigungselement formkorrespondierenden zweiten Befestigungselement verbindbar ist, indem eines der Befestigungselemente in das andere Befestigungselement einfügbar ist bzw. eingefügt wird. Für eine robuste Verbindung hat es sich bewährt, wenn dabei eines der Befestigungselemente das andere Befestigungselement zur Herstellung einer formschlüssigen Verbindung hintergreift. Üblicherweise ist dabei das erste Befestigungselement als Befestigungsstift und das zweite Befestigungselement als Befestigungsstiftaufnahme ausgebildet, oder umgekehrt.

Hierzu kann zweckmäßig vorgesehen sein, dass die Ablagekonstruktion eine oder mehrere zweite Befestigungselemente umfasst, welche, üblicherweise positionsfest, vorzugsweise formschlüssig und/oder kraftschlüssig, an der Fahrzeuginnenwand montierbar sind, um den Ablagekörper bzw. das Zugmittel im Einsatzzustand durch, insbesondere lösbares, Verbinden des ersten Befestigungselementes mit einem der zweiten Befestigungselemente an der Fahrzeuginnenwand zu befestigen bzw. an die Fahrzeuginnenwand zu spannen. Dadurch kann je nach Anwendungsbedingungen, insbesondere einer eingestellten Höhe und/oder Neigung, des Ablagekörpers ein passendes zweites Befestigungselement gewählt werden. Praktisch ist es, wenn mehrere zweite Befestigungselemente als Teil einer Befestigungsschiene ausgebildet sind, wobei die Befestigungsschiene, üblicherweise positionsfest, an der Fahrzeuginnenwand montierbar ist. Zweckmäßig ist es hierbei, wenn die mehreren zweiten Befestigungselemente entlang einer Längsrichtung der Befestigungsschiene beabstandet voneinander an der Befestigungsschiene angeordnet sind. Häufig sind mehrere solche Befestigungsschienen vorgesehen, welche aneinander anschließend oder beabstandet voneinander an einer oder mehreren Fahrzeuginnenwänden montierbar sind. Bewährt hat es sich, wenn die mehreren zweiten Befestigungselemente als Befestigungsstiftaufnahmen ausgebildet sind, in welche ein als Befestigungsstift ausgebildetes erstes Befestigungselement einfügbar ist, um eine formschlüssige und/oder kraftschlüssige Verbindung herzustellen. Die Befestigungsstiftaufnahmen sind üblicherweise ausgebildet, einen Abschnitt des Befestigungsstiftes zu hintergreifen, um eine formschlüssige Verbindung zwischen der Befestigungsstiftaufnahme und dem Befestigungsstift herzustellen. Eine einfache Handhabbarkeit ist erreichbar, wenn die Befestigungsschiene eine Führung aufweist, welche derart ausgebildet ist, dass ein mit einem der zweiten Befestigungselemente der Befestigungsschiene verbundenes erstes Befestigungselement mit der Führung geführt zu einem anderen der zweiten Befestigungselemente der Befestigungsschiene verschiebbar ist. Sind die zweiten Befestigungselemente als Befestigungsstiftaufnahmen ausgebildet, hat es sich bewährt, wenn die Führung als Nut ausgebildet ist, welche die Befestigungsstiftaufnahmen miteinander verbindet. Zweckmäßig ist es, wenn die Führung ausgebildet ist, einen Abschnitt eines in die Führung eingefügten Befestigungsstiftes zu hintergreifen, sodass der Befestigungsstift formschlüssig geführt mit der Führung in der Nut verschiebbar ist. Im Besonderen kann die Befestigungsschiene mit den zweiten Befestigungselementen bzw. Befestigungsaufnahmen entsprechend einer aus der Flugzeugindustrie bekannten Zurrschiene oder Airlineschiene ausgebildet sein und bevorzugt das erste Befestigungselement als dazu formkorrespondierende Zurröse. Von Vorteil ist es, wenn die Ablagekonstruktion mehrere vorgenannte Befestigungseinrichtungen aufweist, um den Ablagekörper in unterschiedliche Bewegungsrichtungen an einer oder mehreren Fahrzeuginnenwänden des Fahrzeuges zu befestigen, insbesondere an diese zu spannen. Bewährt hat es sich hierbei, wenn die Befestigungseinrichtungen an unterschiedlichen, insbesondere einander gegenüberliegenden, Seiten des Ablagekörpers angeordnet sind.

Es kann sein, dass die vorgenannten zweiten Befestigungselemente bzw. Befestigungsschienen bereits in einem Fahrzeug, insbesondere in einem Wohnmobil, vorhanden sind, insbesondere wenn das Fahrzeug gemäß einem nachstehenden erfindungsgemäßen Fahrzeug ausgebildet ist. Es ist dann ausreichend, wenn die Ablagekonstruktion den mit zumindest einem ersten Befestigungselement gebildeten Befestigungsverschluss umfasst.

Eine hohe Robustheit ist erreichbar, wenn die Ablagekonstruktion zumindest ein Beabstandungselement aufweist, welches im Einsatzzustand zwischen dem Ablagekörper und der Fahrzeuginnenwand anordenbar ist, sodass der Ablagekörper im Befestigungszustand gegen das Beabstandungselement pressbar ist bzw. gepresst wird. Auf diese Weise kann eine Gefahr einer Beschädigung des Ablagekörpers vermindert werden. Insbesondere dient das Beabstandungselement dazu, eine ungleichmäßige Form der Fahrzeuginnenwand auszugleichen bzw. eine stabile Fläche zu schaffen gegen welche der Ablagekörper im Befestigungszustand pressbar ist. Vorzugsweise sind mehrere Beabstandungselemente vorgesehen. Das Beabstandungselement weist häufig im Wesentlichen eine Gestalt eines Quaders oder Würfels auf. Zweckmäßig ist es, wenn das Beabstandungselement eine Fixiereinrichtung aufweist, mit welcher der Beabstandungselement, insbesondere lösbar, formschlüssig und/oder kraftschlüssig am Ablagekörper und/oder der Fahrzeuginnenwand befestigbar ist. Praktisch ist es, wenn die Fixiereinrichtung ausgebildet ist, das Beabstandungselement magnetisch am Ablagekörper und/oder der Fahrzeuginnenwand zu befestigen. Zweckmäßig kann das Beabstandungselement hierzu ein oder mehrere Magnete, insbesondere in Form von auf einer Oberfläche des Beabstandungselementes angeordneten magnetischen Schichten, aufweisen. Bewährt hat es sich, wenn das Beabstandungselement eine elastisch verformbare Oberfläche aufweist, um Stoßkraftspitzen bei einer Bewegung des Ablagekörpers relativ zum Beabstandungselement zu vermindern. Üblicherweise ist das Beabstandungselement bzw. dessen Oberfläche mit Kunststoff und/oder Gummi gebildet. Zweckmäßig ist es, wenn die Oberfläche des Beabstandungselementes einen Elastizitätskoeffizienten bzw. ein Elastizitätsmodul aufweist, welcher kleiner ist als ein Elastizitätskoeffizient bzw. ein Elastizitätsmodul einer Ablagekörperoberfläche des Ablagekörpers, an welche die Oberfläche des Beabstandungselementes bei der Befestigung pressbar ist bzw. gepresst wird.

Für eine robuste und fehlerarme Bedienbarkeit ist es günstig, wenn das Federelement und/oder der Zugmittelantrieb bzw. Bedienvorrichtungsantrieb und/oder die Zugmittelwinde bzw. Bedienvorrichtungswinde zumindest teilweise, bevorzugt gänzlich, innerhalb des Ablagekörpers oder in diesen versenkt angeordnet ist. Bewährt hat es sich alternativ oder kumulativ, wenn das Zugmittel und/oder das Koppelmittel zumindest teilweise innerhalb des Ablagekörpers verlaufend angeordnet sind.

Vorteilhaft ist es, wenn der Ablagekörper zumindest eine Markise mit einem Markisendach aufweist, wobei das Markisendach relativ zu einem die Ablagefläche bildenden Oberbau des Ablagekörpers bzw. zur Ablagefläche beweglich, insbesondere ausfahrbar, mit dem Oberbau verbunden ist. Auf diese Weise kann die Ablagekonstruktion bzw. der Ablagekörper genutzt werden, um im Einsatzzustand, insbesondere bei geöffneter Türe des Fahrzeuges, einen Sonnenschutz zu erzeugen, indem das Markisendach, vorzugsweise durch eine geöffnete Türe des Fahrzeuges hindurch, bewegt bzw. ausgefahren wird. Üblicherweise ist das Markisendach in einen Anwendungszustand bewegbar, insbesondere ausfahrbar, in welcher das Markisendach den Oberbau überragt. Eine Höhe und/oder Neigung des Markisendaches in einem ausgefahrenen Zustand des Markisendaches kann vorteilhaft durch ein Höhenverstellen und/oder Kippen des Ablagekörpers mit der Hebevorrichtung eingestellt werden. Praktisch ist es, wenn die Markise eine Markisenverstelleinrichtung aufweist, mit welcher in einem Anwendungszustand des Markisendaches eine Höhe bzw. Beabstandung und/oder Neigung des Markisendaches relativ zum Oberbau einstellbar ist. Hierzu kann die Markise einen mechanischen, pneumatischen, hydraulischen und/oder elektrischen Markisenantrieb aufweisen. Für eine hohe Stabilität des Markisendaches ist es günstig, wenn die Markise zumindest eine Markisenstütze aufweist, um das Markisendach mit der Markisenstütze an einem Untergrund einer Umgebung der Ablagekonstruktion, beispielsweise einem Untergrund, auf welchem das Fahrzeug angeordnet ist, oder einer Bodenfläche des Fahrzeuges, abzustützen. Die Markisenstütze kann, insbesondere lösbar, mit dem Markisendach verbunden sein. Bewährt hat es sich, wenn die Markisenstütze relativ zum Markisendach schwenkbar mit dem Markisendach verbunden ist. Günstig für eine einfache und robuste Positionierung ist es, wenn eine Längserstreckung der Markisenstütze variierbar ist. Dadurch kann die Markisenstütze bzw. deren Längserstreckung an eine jeweilige Umgebung angepasst werden. Ein robuster Aufbau ist erreichbar, wenn die Markisenstütze teleskopartig ineinander verschiebbare Abschnitte aufweist, um die Längserstreckung der Markisenstütze zu variieren.

Praktisch ist es, wenn der Ablagekörper einen mit einer Tischplatte gebildeten Tisch aufweist, wobei die Tischplatte relativ zu einem die Ablagefläche bildenden Restkörper des Ablagekörpers reversibel bewegbar, insbesondere absenkbar, am Restkörper angeordnet ist. Auf diese Weise kann die Ablagekonstruktion bzw. der Ablagekörper genutzt werden, um im Einsatzzustand je nach Bedarf einen Tisch zur Verfügung zu stellen. Der Restkörper kann dabei vorgenannter Oberbau sein. Die Tischplatte kann in der Regel reversibel von einem Nichtgebrauchszustand in einen Gebrauchszustand relativ zum Restkörper bewegt werden. Üblicherweise ist die Tischplatte ausfahrbar bzw. absenkbar am Restkörper angeordnet. Der Tisch bzw. die Tischplatte ist vorzugsweise an einer der Ablagefläche abgewandten Seite, meist Unterseite, des Ablagekörpers am Restkörper angeordnet bzw. mit diesem verbunden. Eine Höhe und/oder Neigung der Tischplatte im Gebrauchszustand der Tischplatte kann vorteilhaft durch ein Höhenverstellen und/oder Kippen des Ablagekörpers mit der Hebevorrichtung eingestellt werden. Praktisch ist es, wenn der Tisch eine Justiereinrichtung aufweist, mit welcher die Tischplatte relativ zum Restkörper bewegbar, insbesondere ausfahrbar bzw. absenkbar, mit dem Restkörper verbunden ist. Vorzugsweise ist die Justiereinrichtung ausgebildet eine Höhe bzw. Beabstandung und/oder Neigung der Tischplatte relativ zum Restkörper einzustellen. Hierzu kann der Tisch einen mechanischen, pneumatischen, hydraulischen und/oder elektrischen Tischantrieb aufweisen. Für eine hohe Praktikabilität ist es günstig, wenn die Justiereinrichtung mit einem Führungssystem gebildet ist, um die Tischplatte mit dem Führungssystem geführt relativ zum Restkörper zu bewegen, insbesondere auszufahren bzw. abzusenken und/oder zu neigen. Günstig ist es, wenn die Justiereinrichtung bzw. das Führungssystem derart ausgebildet ist, dass eine Winkelstellung der Tischplatte während eines Bewegens der Tischplatte mit der Justiereinrichtung bzw. dem Führungssystem erhalten bleibt. Hierzu kann das Führungssystem mit bzw. als Parallelogrammführung ausgebildet sein. Für eine hohe Robustheit hat es sich bewährt, wenn die Tischplatte in einem Nichtgebrauchszustand des Tisches zumindest teilweise, bevorzugt gänzlich, versenkbar im Restkörper anordenbar ist.

Praktisch ist es, wenn der Ablagekörper, vorzugsweise an einer der Ablagefläche gegenüberliegenden Seite des Ablagekörpers, ein oder mehrere Trageeinrichtungen aufweist, um Gebrauchsgegenstände am Ablagekörper zu befestigen. Die Trageeinrichtung kann insbesondere zur Befestigung von Sportgeräten, beispielsweise eines Kajaks, eines Fahrrades und/oder einer Angelausrüstung, am Ablagekörper ausgebildet sein. Zweckmäßig ist es, wenn die Trageeinrichtung mit einer bzw. als Wäscheaufhängeinrichtung ausgebildet ist, um Wäsche am Ablagekörper aufzuhängen. Praktisch ist es, wenn die Trageeinrichtung ein oder mehrere magnetische Magnetbefestigungen aufweist, um Gebrauchsgegenstände lösbar magnetisch mit den Magnetbefestigungen am Ablagekörper zu befestigen.

Praktikabel ist es, wenn der Ablagekörper ein oder mehrere Fixierelemente aufweist, welche entsprechend einem vorgenannten zweiten Befestigungselement bzw. einer vorgenannten Befestigungsschiene ausgebildet sind, um Gebrauchsgegenstände am Ablagekörper zu montieren. Die Fixierelemente können als Teil der Trageeinrichtung ausgebildet sein.

Eine hohe Einsatzpraktikabilität ist erreichbar, wenn der Ablagekörper ein oder mehrere Stauräume aufweist, in welchen Gebrauchsgegenstände zur Lagerung einfügbar sind. Vorzugsweise ist der Stauraum mit einer Lade gebildet.

Günstig ist es, wenn der Ablagekörper eine oder mehrere elektrische Steckdosen aufweist, um elektrische Geräte durch Anstecken an den Steckdosen mit elektrischer Energie zu versorgen. Zweckmäßig ist es hierbei, wenn die Steckdosen mit einer Fahrzeugenergieversorgungseinrichtung, insbesondere einer Fahrzeugbatterie bzw. einem Fahrzeugakkumulator und/oder einem Fahrzeuggenerator, des Fahrzeuges verbindbar sind, um den Steckdosen elektrische Energie zuzuführen.

Mit Vorteil ist ein Fahrzeug mit einer, insbesondere vorgenannten, Ablagekonstruktion vorgesehen, wobei die Ablagekonstruktion mit der Hebevorrichtung hängend im Fahrzeug relativ zum Fahrzeug bzw. einem Aufbau des Fahrzeuges in einer Bewegungsrichtung beweglich angeordnet ist, wobei die Ablagekonstruktion zumindest eine vorgenannte Befestigungseinrichtung aufweist, mit welcher der Ablagekörper in Bewegungsrichtung an einer Fahrzeuginnenwand des Fahrzeuges, insbesondere lösbar, befestigbar bzw. befestigt ist. Entsprechend den vorgenannten Merkmalen, Wirkungen und Vorteilen einer, insbesondere erfindungsgemäßen, Ablagekonstruktion ermöglicht auch ein Fahrzeug mit einer solchen Ablagekonstruktion eine hohe Praktikabilität.

Üblicherweise ist der Ablagekörper mit der Befestigungseinrichtung, insbesondere entsprechend vorgenannten Ausführungen, an die Fahrzeuginnenwand spannbar bzw. gespannt. Zweckmäßig ist es, wenn die Ablagekonstruktion an einer Fahrzeuginnenraumdecke des Fahrzeuges mit der Hebevorrichtung hängend angeordnet ist.

Für eine einfache Handhabung ist es günstig, wenn eine oder mehrere Fahrzeuginnenwände des Fahrzeuges ein oder mehrere, insbesondere vorstehend erläuterte, zweite Befestigungselemente oder Befestigungsschienen mit zweiten Befestigungselementen aufweisen, um den Ablagekörper mit der Befestigungseinrichtung, insbesondere einem oder mehreren ersten Befestigungselementen der Befestigungseinrichtung, an den zweiten Befestigungselementen zu befestigen bzw. an diese zu spannen.

Mit Vorteil ist vorgesehen, dass der Ablagekörper zumindest eine, insbesondere vorgenannte, Markise aufweist, wobei die Markise durch eine geöffnete Türe des Fahrzeuges hindurch bewegbar, insbesondere ausfahrbar, ist. Für eine hohe Stabilität ist es günstig, wenn die Markise eine Markisenstütze aufweist, mit welcher das Markisendach an einer Umgebung der Ablagekonstruktion, insbesondere einem Untergrund, auf welchem das Fahrzeug angeordnet ist, oder einer Bodenfläche des Fahrzeuges abstützbar ist. Zweckmäßig kann das Fahrzeug ein Stützenfixierungselement aufweisen, welches formkorrespondierend zu einem Stützensegment der Markisenstütze ausgebildet ist, um das Stützenfixierungselement mit dem Stützensegment formschlüssig und/oder kraftschlüssig lösbar, insbesondere durch Ineinanderstecken, zu verbinden. Das Fahrzeug kann mehrere solche Stützenfixierungselemente aufweisen.

Bewährt hat es sich, wenn das Fahrzeug zumindest eine Stützenabstellvorrichtung aufweist, welche relativ zu einem Aufbau des Fahrzeuges in eine vom Aufbau abragende Stützposition bewegbar ist, um in der Stützposition mit der Stützenabstellvorrichtung die Markisenstütze gegen das Markisendach mit der Stützenabstellvorrichtung abzustützen. Auf diese Weise ist ein Abstützen der Markisenstütze am Fahrzeug selbst bzw. dessen Aufbau praktikabel, insbesondere unabhängig von einem Fahrzeuguntergrund, auf welchem das Fahrzeug angeordnet ist, umsetzbar. Ein Aufbau des Fahrzeuges ist dabei üblicherweise je nach Fahrzeugtyp mit bzw. durch eine Karosserie, einem Untergestell und/oder Fahrzeugwänden des Fahrzeuges gebildet. In der Regel ist vorgesehen, dass durch Bewegen der Stützenabstellvorrichtung in die Stützposition eine Abmessung des Fahrzeuges, insbesondere eine Länge oder eine Breite des Fahrzeuges vergrößert wird. Die Stützenabstellvorrichtung stellt damit eine Hilfskonstruktion für ein praktikables Abstützen der Markisenstütze dar. Zweckmäßig kann die Stützenabstellvorrichtung mit einer Stützenabstellfläche gebildet sein, auf welche die Markisenstütze abstellbar ist. Für eine einfache Handhabung ist es günstig, wenn die Stützenabstellvorrichtung ausfahrbar oder wegklappbar vom Aufbau des Fahrzeuges, bevorzug heckseitig oder flankenseitig am Fahrzeug, ausgebildet ist, um die Stützenabstellvorrichtung in die Stützposition zu bewegen. Im Besonderen kann das Stützenfixierungselement als Teil der Stützenabstellvorrichtung, insbesondere der Stützenabstellfläche, ausgebildet sein. Für eine hohe Einsatzflexibilität ist es günstig, wenn das Fahrzeug mehrere Stützenabstellvorrichtungen an unterschiedlichen Positionen am Fahrzeug aufweist. Diese sind vorzugsweise sowohl flankenseitig als auch heckseitig am Fahrzeug angeordnet.

Eine hohe Benutzerfreundlichkeit ist erreichbar, wenn die Stützenabstellvorrichtung mit einer ausfahrbaren Lade, etwa einer Schublade, gebildet ist, um die Markisenstütze in einem ausgefahrenen Zustand der Lade auf einer Bodenfläche der Lade abzustellen bzw. abzustützen. Die Lade ist dabei in der Regel heckseitig oder flankenseitig am Fahrzeug über einen Rand des Aufbaus des Fahrzeuges ausfahrbar angeordnet. Für eine hohe Einsatzflexibilität kann sowohl heckseitig als auch flankenseitig am Fahrzeug jeweils zumindest eine Lade angeordnet sein. Es hat sich bewährt, wenn die Lade in einem nicht ausgefahrenen Zustand der Lade innerhalb des Fahrzeuges, insbesondere in einem Laderaum des Fahrzeuges angeordnet ist, sodass die Lade bei geöffneter Fahrzeugtüre, insbesondere Laderaumtüre des Fahrzeuges, durch die Fahrzeugtüre hindurch ausfahrbar ist. Die Laderaumtüre ist meist eine Seitentüre bzw. Flankentüre oder Hecktüre des Fahrzeuges. Zweckmäßig ist es, wenn die Lade derart größenkorrespondierend zur Markisenstütze ausgebildet ist, dass die Markisenstütze in einem Nichtgebrauchszustand in der Lade verstaubar ist.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 eine schematische Darstellung einer Ablagekonstruktion für ein Fahrzeug;
Fig. 2 eine schematische Darstellung der Ablagekonstruktion der Fig. 1 in einem Fahrzeug;
Fig. 3, Fig. 4, Fig. 5 schematische Darstellungen einer in einem Fahrzeug angeordneten Ablagekonstruktion mit einer bewegbaren Markise.

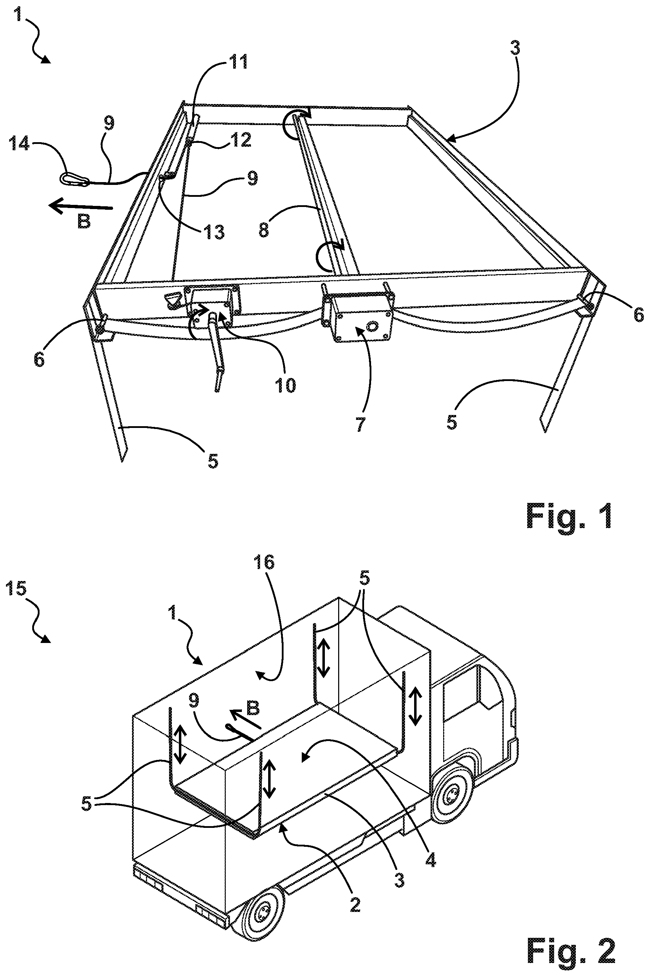

Fig. 1 zeigt eine schematische Darstellung einer Ablagekonstruktion 1 für ein Fahrzeug 15, welche als Bettkonstruktion bzw. Bett ausgebildet ist. Die Ablagekonstruktion 1 weist einen Ablagekörper 2 auf, welcher mit einem Rahmen 3 und einer am Rahmen 3 angreifenden Hebevorrichtung gebildet ist, um mit der Hebevorrichtung den Ablagekörper 2 bzw. den Rahmen 3 hängend im Fahrzeug 15 anzuordnen, sodass der Ablagekörper 2 in einer Bewegungsrichtung B relativ zum Fahrzeug 15 beweglich ist, ersichtlich dargestellt in Fig. 2. Vorgesehen ist, dass am Rahmen 3 eine Ablagefläche 4 zur Ablage einer Person auf der Ablagefläche 4 angeordnet ist. In Fig. 1 ist die Ablagefläche 4 aus Verständlichkeitsgründen und Übersichtsgründen nicht dargestellt, um einen Aufbau des Ablagekörpers 2 verständlich darzulegen. Die Ablagefläche 4 des Ablagekörpers 2 ist üblicherweise durch den Rahmen 3 gestützt am Rahmen 3 angeordnet bzw. liegt insbesondere am Rahmen 3 auf. Die Hebevorrichtung ist mit mehreren als Gurte 5 ausgebildeten Hebemittel gebildet, um den Ablagekörper 2 bzw. Rahmen 3 mit den Gurten 5 im Fahrzeug 15 aufzuhängen, ersichtlich dargestellt in Fig. 2. Vorzugsweise bildet jeweils einer der Gurte 5 eine Gurtschlaufe, in welche der Ablagekörper 2 bzw. Rahmen 3 gleitend geführt eingehängt ist. Wie in Fig. 1 gezeigt, können hierzu zweckmäßig eine oder mehrere Umlenkführungen 6 am Rahmen 3 angeordnet sein, über welche der jeweilige Gurt 5 geführt ist. Für eine ausgeprägte Stabilität sind vorzugsweise mehrere mit Gurten 5 gebildete Gurtschlaufen beabstandet voneinander entlang einer Erstreckungsachse, üblicherweise einer Längsachse, des Ablagekörpers 2 bzw. Rahmens 3 am Rahmen 3 angeordnet. Ein praktikabler Aufbau ist umsetzbar, wenn der jeweilige Gurt 5 zur Bildung der Gurtschlaufe quer zur Erstreckungsachse über einander in Bezug auf die Erstreckungsachse gegenüberliegende Angriffspunkte, an welchen der Gurt 5 bzw. die Gurtschlaufe am Rahmen 3 angreift bzw. diesen stützt, geführt ist. Hierzu können in Bezug auf die Erstreckungsachse einander gegenüberliegend Umlenkführungen 6 am Rahmen 3 angeordnet sein. In Fig. 1 ist eine an einem Erstreckungsende des Rahmens 3 angeordnete mit einem Gurt 5 gebildete Gurtschlaufe ersichtlich, wobei der Gurt 5 über zwei in Bezug auf die Erstreckungsachse einander gegenüberliegende am Rahmen 3 angeordnete Umlenkführungen 6 geführt ist. Es versteht sich, dass üblicherweise am anderen - in die Zeichenfläche der Fig. 1 hineinragendem - Erstreckungsende des Rahmens 3 eine mit einem weiteren Gurt 5 gebildete derartige Gurtschlaufe angeordnet ist.

Die Hebevorrichtung ist ausgebildet, den Ablagekörper 2 im Einsatzzustand mit der Hebevorrichtung höhenzuverstellen, insbesondere abzusenken bzw. anzuheben. Hierzu ist vorgesehen, dass die Einsatzlängen der Gurte 5 steuerbar variierbar sind.

Zweckmäßig weist die Hebevorrichtung hierzu zumindest eine, vorzugsweise elektrisch angetriebene, Hebemittelwinde 7 auf, mit welcher die Gurte 5 aufwickelbar sind, um deren Einsatzlänge zu variieren. Ein robuster Aufbau ist umsetzbar, wenn die Hebemittelwinde 7 zumindest eine Trommel 8 aufweist, um die Gurte 5 mit der Trommel 8 aufzuwickeln. Wie in Fig. 1 ersichtlich, kann die Trommel 8 entlang einer Erstreckung, insbesondere Längserstreckung, des Rahmens 3 geführt sein, sodass mehrere Gurte 5 mit der Trommel 8 aufwickelbar sind. Die Trommel 8 bzw. deren Längsachse ist vorzugsweise im Wesentlichen parallel zur Ablagefläche 4 ausgerichtet. Gemäß Fig. 1 erstreckt sich die die Trommel 8 ausgehend von der Hebemittelwinde 7 von einem Erstreckungsende des Rahmens 3 bis zum diesem gegenüberliegenden anderem Erstreckungsende des Rahmens 3, um auch den am gegenüberliegenden Erstreckungsende angeordneten Gurt 5 mit der Trommel 8 aufzuwickeln. Auf diese Weise können die Einsatzlängen der Gurte 5 einfach umsetzbar zeitparallel eingestellt werden. Alternativ können aber auch mehrere Hebemittelwinden 7 vorgesehen sein, um die Gurte 5 separat voneinander aufzuwickeln bzw. abzuwickeln.

Um eine Beweglichkeit des Ablagekörpers 2 bzw. Rahmens 3 einzuschränken, ist eine Befestigungseinrichtung mit einem als Zugseil ausgebildeten Zugmittel 9 vorhanden, um den Ablagekörper 2 bzw. Rahmen 3 in einer Bewegungsrichtung B mit dem Zugmittel 9 an eine Fahrzeuginnenwand 16 des Fahrzeuges 15 zu spannen. Die Befestigungseinrichtung weist eine als Zugseilwinde ausgebildete Zugmittelwinde 10 auf, mit welcher das Zugmittel 9 reversibel aufwickelbar bzw. reversibel abwickelbar ist, um eine Einsatzlänge des Zugmittels 9 zu ändern. Dadurch kann der Ablagekörper 2 praktikabel durch Ändern der Einsatzlänge des Zugmittels 9 an die Fahrzeuginnenwand 16 gespannt werden. Es hat sich bewährt, wenn die Zugmittelwinde 10 einen mechanischen Zugmittelantrieb aufweist, welche vorzugsweise über einen Bedienhebel von einem Benutzer antreibbar ist. Weiter ist vorgesehen, dass die Befestigungseinrichtung ein als Schraubenfeder ausgebildetes Federelement 11 aufweist, um den Ablagekörper 2 bzw. Rahmen 3 mit dem Zugmittel 9 entgegen einer Federkraft des Federelementes 11 an die Fahrzeuginnenwand 16 zu spannen, sodass eine Bewegung des Ablagekörpers 2 in Bewegungsrichtung B entgegen der Federkraft begrenzt ermöglicht ist. Dadurch kann eine Bewegung des Ablagekörpers 2 relativ zur Fahrzeuginnenwand 16 bzw. insbesondere auftretende Stoßkräfte zwischen dem Ablagekörper 2 und der Fahrzeuginnenwand 16 gedämpft werden. Das Federelement 11 ist vorzugsweise als Schraubenfeder ausgebildet.

Günstig ist es, wenn die Befestigungseinrichtung eine Bedienvorrichtung aufweist, mit welcher die Auslenkung des Federelementes 11 in einem Befestigungszustand, in welchem der Ablagekörper 2 mit dem Zugmittel 9 an der Fahrzeuginnenwand 16 befestigt bzw. an diese gespannt ist, einstellbar ist. Auf diese Weise kann eine auf den Ablagekörper 2 wirkende Federkraft an eine jeweilige Anwendungssituation angepasst werden. Praktisch ist es, wenn die Bedienvorrichtung mit der Zugmittelwinde 10 umgesetzt ist, indem im Befestigungszustand durch Einstellen einer Zugspannung des Zugmittels 9 mit der Zugmittelwinde 10 eine Auslenkung des Federelementes 11 änderbar bzw. einstellbar ist. Wie in Fig. 1 ersichtlich, ist dies praktikabel umsetzbar, wenn ein erstes Befestigungsende des Federelementes 11 positionsfest am Rahmen 3 angeordnet ist und ein zweites Befestigungsende des Federelementes 11, welches relativ zum ersten Befestigungsende entgegen der Federkraft des Federelementes 11 auslenkbar ist, ein Umlenkelement 12, beispielsweise eine Umlenkrolle, aufweist, wobei das Zugmittel 9 ausgehend von der Zugmittelwinde 10 über das Umlenkelement 12 des Federelementes 11 gleitend geführt ist und von diesem, häufig über ein weiteres am Rahmen 3 angeordnetes Umlenkelement, für eine Befestigung des Zugmittels 9 mit der Fahrzeuginnenwand 16 weiter geführt ist bzw. im Befestigungszustand zur Fahrzeuginnenwand 16 weiter geführt ist, sodass durch Ändern einer Zugspannung des Zugmittels 9 eine Auslenkung der Federelementes 11 änderbar ist. Das Zugmittel 9 ist dabei üblicherweise durch eine Durchgangsöffnung 13 des Rahmens 3 nach außen in Richtung der Fahrzeuginnenwand 16 geführt, um das Zugmittel 9 an der Fahrzeuginnenwand 16 zu befestigen. Zweckmäßig weist das Zugmittel 9 hierzu, in der Regel an einem Zugmittelende des Zugmittels 9, ein Befestigungselement 14 auf, mit welchem das Zugmittel 9 formschlüssig und/oder kraftschlüssig an der Fahrzeuginnenwand 16 anordenbar ist. Das Befestigungselement 14 kann beispielsweise als Haken, insbesondere Karabinerhaken, ausgebildet sein. Bewährt hat es sich, wenn das Federelement 11 und die Zugmittelwinde 10 an unterschiedlichen Rahmenwänden, insbesondere einander gegenüberliegenden Rahmenwänden, des Rahmens 3 angeordnet sind, wobei das Federelement 11 vorzugsweise innenwandseitig und/oder die Zugmittelwinde 10 vorzugsweise außenwandseitig an der jeweiligen Rahmenwand angeordnet ist. Auf diese Weise ist das Federelement 11 vor äußeren Umgebungseinflüssen geschützt und ein kompakter Aufbau des Ablagekörpers 2 erreichbar.

Fig. 2 zeigt eine schematische Darstellung eines Fahrzeuges 15 mit der Ablagekonstruktion 1 der Fig. 1, in welchem der Ablagekörper 2 mit der Hebevorrichtung bzw. deren Gurten 5 hängend angeordnet ist, sodass der Ablagekörper 2 in einer Bewegungsrichtung B beweglich ist. Hierzu sind die Gurte 5 in der Regel an einer Fahrzeuginnendecke des Fahrzeuges 15, vorzugsweise positionsfest, montiert. Der Ablagekörper 2 ist bevorzugt derart ausgerichtet, dass die Ablagefläche 4 des Ablagekörpers 2 im Wesentlichen horizontal ausgerichtet ist, um eine Person auf der Ablagefläche 4 anzuordnen. Wie in Fig. 2 ersichtlich, ist der Ablagekörper 2 durch Variieren der Einsatzlängen der Gurte 5 höhenverstellbar, insbesondere anhebbar bzw. absenkbar. Vorzugsweise ist ein Anheben und Absenken des Ablagekörpers 2 mit der Hebevorrichtung ohne Änderung eine Neigung der Ablagefläche 4 durchführbar. Weiter ersichtlich in Fig. 2 ist die mit dem Zugmittel 9 gebildete Befestigungseinrichtung, mit welcher der Ablagekörper 2 in einer Bewegungsrichtung B an eine Fahrzeuginnenwand 16 des Fahrzeuges 15 spannbar ist bzw. gespannt ist. Auf diese Weise kann die Ablagefläche 4 des Ablagekörpers 2 unabhängig von einer Ausrichtung des Fahrzeuges 15 geändert werden bzw. ist die Ablagefläche 4 von Erschütterungen des Fahrzeuges 15 zumindest teilweise entkoppelbar. Indem der Ablagekörper 2 unter Federkraftbelastung der Feder an die Fahrzeuginnenwand 16 gespannt ist, ist eine Ablage einer Person auf der Ablagefläche 4 unter reduzierten Schwenkbewegungen des Ablagekörpers 2 ermöglicht. Insbesondere können Druckkraftspitzen zwischen dem Ablagekörper 2 und der Fahrzeuginnenwand 16 reduziert bzw. Erschütterungen insbesondere während einer Fahrt des Fahrzeuges 15 gedämpft werden.

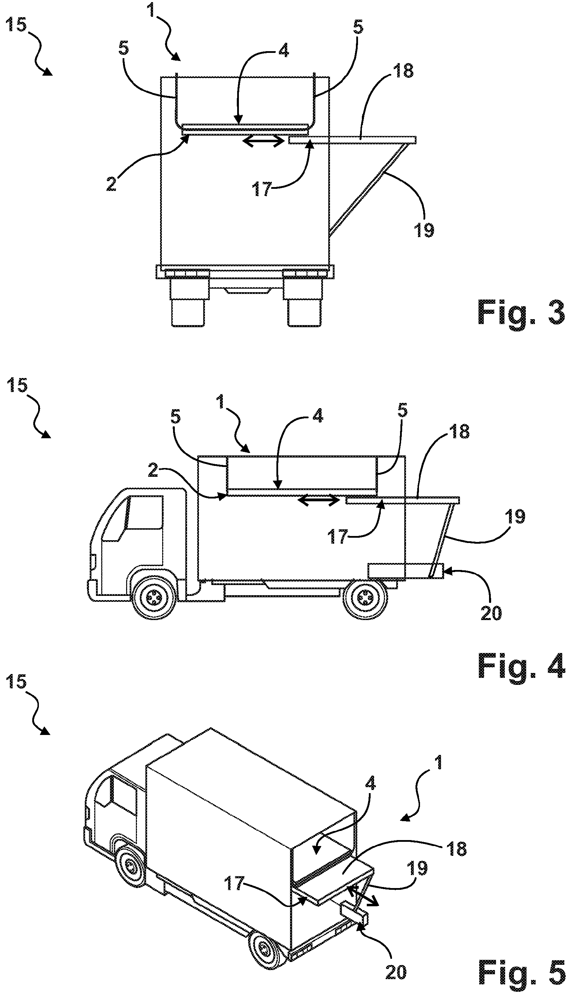

Fig. 3 bis Fig. 5 zeigen schematische Darstellungen des Fahrzeuges 15 gemäß Fig. 2 mit der Ablagekonstruktion 1 gemäß Fig. 1, wobei zudem vorgesehen ist, dass die Ablagekonstruktion 1 eine Markise 17 aufweist. Die Markise 17 weist ein Markisendach 18 auf und ist relativ zu einem die Ablagefläche 4 bildenden Oberbau des Ablagekörpers 2 ausfahrbar mit dem Oberbau verbunden. Die Ablagekonstruktion 1 kann auf diese Weise genutzt werden, um im Einsatzzustand einen Sonnenschutz zu erzeugen. Zweckmäßig ist hierbei vorgesehen, dass das Markisendach 18 durch eine geöffnete Türe des Fahrzeuges 15 hindurch ausfahrbar ist. Es hat sich bewährt, wenn die Ablagekonstruktion 1 derart im Fahrzeug 15 angeordnet bzw. ausgebildet ist, dass das Markisendach 18, wie in Fig. 3 dargestellt, durch eine geöffnete Seitentüre bzw. Flankentüre des Fahrzeuges 15 hindurch ausfahrbar ist. Alternativ oder kumulativ kann die Ablagekonstruktion 1 derart im Fahrzeug 15 angeordnet bzw. ausgebildet sein, dass die Markise 17 durch eine geöffnete Hecktüre des Fahrzeuges 15 hindurch ausfahrbar ist, dargestellt in Fig. 4 und Fig. 5. Indem außerdem der Ablagekörper 2 mit der Befestigungseinrichtung an die Fahrzeuginnenwand 16 spannbar bzw. gespannt ist, ist eine hohe Stabilität des Markisendaches auch bei auf das Markisendach 18 einwirkenden Windkräften ermöglicht.

Für eine hohe Stabilität des Markisendaches in einem ausgefahrenen Zustand der Markise 17 ist es günstig, wenn die Markise 17 eine Markisenstütze 19 aufweist, mit welcher das Markisendach 18 an einem Aufbau des Fahrzeuges 15, insbesondere einem Fahrzeugboden, abstützbar ist. Günstig für eine einfache Handhabung ist es, wenn die Markisenstütze 19 schwenkbar mit dem Markisendach 18 verbunden ist. Eine hohe Praktikabilität ist erreichbar, wenn das Fahrzeug 15 eine Stützenabstellvorrichtung aufweist, welche relativ zum Aufbau des Fahrzeuges 15 in eine vom Aufbau abragende Stützposition bewegbar ist, um in der Stützposition mit der Stützenabstellvorrichtung die Markisenstütze 19 gegenüber dem Markisendach 18 abzustützen. Dies ist robust umsetzbar, wenn die Stützenabstellvorrichtung mit einer ausfahrbaren Schublade 20 gebildet ist, um die Markisenstütze 19 in einem ausgefahrenen Zustand der Schublade 20 auf einer Bodenfläche der Schublade 20 abzustellen bzw. mit der Bodenfläche der Schublade 20 abzustützen, ersichtlich dargestellt in Fig. 4 und Fig. 5. Die Schublade 20 kann dabei, je nach Anordnung und Ausbildung der Ablagekonstruktion 1 bzw. Markise 17, zweckmäßig an einer Seite bzw. Flanke oder am Heck des Fahrzeuges 15 angeordnet sein. Für eine hohe Robustheit ist es praktikabel, wenn die Schublade 20 durch die geöffnete Seitentüre bzw. Flankentüre oder Hecktüre hindurch ausziehbar ist.

Indem der Ablagekörper 2 hängend im Fahrzeug 15 anordenbar ist und mit der Befestigungseinrichtung bzw. deren Zugmittel 9 an die Fahrzeuginnenwand 16 spannbar bzw. gespannt ist, können die Vorteile einer hängenden Anordnung des Ablagekörpers 2 genutzt und gleichzeitig eine nachteilige Beweglichkeit, insbesondere in bzw. entgegen der Bewegungsrichtung B, je nach konkreter Anwendungssituation eingeschränkt werden. Indem das Zugmittel 9 der Befestigungseinrichtung im Befestigungszustand mit der Federkraft des Federelementes 11 beaufschlagt ist, sodass eine Bewegung des Ablagekörpers 2 in der Bewegungsrichtung B entgegen der Federkraft begrenzt ermöglicht ist, können ungewollte Schwenkbewegungen des Ablagekörpers 2 eingeschränkt und Stoßkräfte bzw. Erschütterungen gedämpft werden, sodass diese nur in reduziertem Maße auf eine auf der Ablagefläche 4 des Ablagekörpers 2 angeordnete bzw. liegende Person wirken.

## Patentansprüche

1. Ablagekonstruktion (1), insbesondere Bettkonstruktion, für ein Fahrzeug (15), wie einen Wohnwagen, aufweisend einen Ablagekörper (2) mit einer Ablagefläche (4) zur Ablage von Ladegut oder einer Person auf der Ablagefläche (4) und zumindest eine Hebevorrichtung, mit welcher der Ablagekörper (2) hängend im Fahrzeug (15) relativ zum Fahrzeug (15) in einer Bewegungsrichtung (B) beweglich anordenbar ist, wobei die Ablagekonstruktion (1) zumindest eine Befestigungseinrichtung aufweist, mit welcher der Ablagekörper (2) in der Bewegungsrichtung (B) an einer Fahrzeuginnenwand (16) des Fahrzeuges (15) befestigbar ist, **dadurch gekennzeichnet, dass** die Befestigungseinrichtung zumindest ein Befestigungsmittel aufweist, mit welchem eine Zugkraft und/oder Druckkraft auf den Ablagekörper (2) einstellbar ausübbar ist, um den Ablagekörper (2) an der Fahrzeuginnenwand (16) zu befestigen.

2. Ablagekonstruktion (1) nach Anspruch 1, **dadurch gekennzeichnet, dass** die Befestigungseinrichtung ein Zugmittel (9) aufweist, um den Ablagekörper (2) mit dem Zugmittel (9) an die Fahrzeuginnenwand (16) zu spannen.

3. Ablagekonstruktion (1) nach Anspruch 2, **dadurch gekennzeichnet, dass** die Befestigungseinrichtung eine Zugmitteleinstellvorrichtung aufweist, mit welcher eine Einsatzlänge des Zugmittels (9) variierbar bzw. einstellbar ist, um den Ablagekörper mit dem Zugmittel (9) an die Fahrzeuginnenwand (16) zu spannen.

4. Ablagekonstruktion (1) nach einem der Ansprüche 1 bis 3, **dadurch gekennzeichnet, dass** die Befestigungseinrichtung zumindest ein Federelement (11) aufweist, um den Ablagekörper (2) mit einer Federkraft des Federelementes (11) belastet an der Fahrzeuginnenwand (16) zu befestigen bzw. an die Fahrzeuginnenwand (16) zu spannen, sodass eine Bewegung des Ablagekörpers (2) in Bewegungsrichtung (B) entgegen der Federkraft begrenzt ermöglicht ist.

5. Ablagekonstruktion (1) nach Anspruch 2 und 4, **dadurch gekennzeichnet, dass** das Zugmittel (9) mit der Federkraft des Federelementes (11) beaufschlagt ist.

6. Ablagekonstruktion (1) nach Anspruch 4 oder 5, **dadurch gekennzeichnet, dass** die Befestigungseinrichtung eine Bedienvorrichtung aufweist, mit welcher die Federkraft einstellbar ist.

7. Ablagekonstruktion (1) nach Anspruch 6, **dadurch gekennzeichnet, dass** mit der Bedienvorrichtung eine Auslenkung des Federelementes (11) änderbar ist, um die Federkraft einzustellen.

8. Ablagekonstruktion (1) nach Anspruch 5 und 7, **dadurch gekennzeichnet, dass** die Bedienvorrichtung ausgebildet ist, im Befestigungszustand eine Zugspannung des Zugmittels (9) einzustellen, um die Auslenkung des Federelementes (11) zu ändern.

9. Ablagekonstruktion (1) nach einem der Ansprüche 5 bis 8, **dadurch gekennzeichnet, dass** das Federelement (11) mit einer Schraubenfeder ausgebildet ist, wobei zwischen Windungen der Schraubenfeder Trennstücke angeordnet sind, um zu verhindern, dass unmittelbar benachbarte Windungen aneinanderstoßen.

10. Ablagekonstruktion (1) nach einem der Ansprüche 1 bis 9, **dadurch gekennzeichnet, dass** die Ablagekonstruktion (1) zumindest ein Beabstandungselement aufweist, welches im Einsatzzustand zwischen dem Ablagekörper (2) und der Fahrzeuginnenwand (16) anordenbar ist, sodass der Ablagekörper (2) im Befestigungszustand gegen das Beabstandungselement pressbar ist.

11. Ablagekonstruktion (1) nach Anspruch 10, **dadurch gekennzeichnet, dass** das Beabstandungselement eine Fixiereinrichtung aufweist, mit welcher der Beabstandungselement magnetisch am Ablagekörper (2) oder der Fahrzeuginnenwand (16) befestigbar ist.

12. Ablagekonstruktion (1) nach einem der Ansprüche 1 bis 11, **dadurch gekennzeichnet, dass** der Ablagekörper (2) zumindest eine Markise (17) mit einem Markisendach (18) aufweist, wobei das Markisendach (18) relativ zu einem die Ablagefläche (4) bildenden Oberbau des Ablagekörpers (2) beweglich, insbesondere ausfahrbar, mit dem Oberbau verbunden ist.

13. Ablagekonstruktion (1) nach einem der Ansprüche 1 bis 12, **dadurch gekennzeichnet, dass** der Ablagekörper (2) einen mit einer Tischplatte gebildeten Tisch aufweist, wobei die Tischplatte relativ zu einem die Ablagefläche (4) bildenden Restkörper des Ablagekörpers (2) reversibel bewegbar, insbesondere absenkbar, am Oberbau angeordnet ist.

14. Fahrzeug (15) mit einer Ablagekonstruktion (1) nach einem der Ansprüche 1 bis 13, wobei die Ablagekonstruktion (1) mit der Hebevorrichtung hängend im Fahrzeug (15) relativ zum Fahrzeug (15) in einer Bewegungsrichtung (B) beweglich angeordnet ist, wobei die Ablagekonstruktion (1) mit der Befestigungseinrichtung in der Bewegungsrichtung (B) an einer Fahrzeuginnenwand (16) des Fahrzeuges (15) befestigbar bzw. befestigt ist, **dadurch gekennzeichnet, dass** die Befestigungseinrichtung zumindest ein Befestigungsmittel aufweist, mit welchem eine Zugkraft und/oder Druckkraft auf den Ablagekörper (2) einstellbar ausübbar ist, um den Ablagekörper (2) an der Fahrzeuginnenwand (16) zu befestigen.

15. Fahrzeug (15) nach Anspruch 14, **dadurch gekennzeichnet, dass** der Ablagekörper (2) zumindest eine Markise (17) gemäß Anspruch 12 aufweist, wobei die Markise (17) durch eine geöffnete Türe des Fahrzeuges (15) hindurch bewegbar, insbesondere ausfahrbar, ist.

## Claims

1. Storage structure (1), in particular bed construction, for a vehicle (15), such as a caravan, comprising a storage body (2) with a storage surface (4) for depositing cargo or a person on the storage surface (4) and at least one lifting device with which the storage body (2) can be movably arranged in a direction of movement (B) relative to the vehicle (15) in relation to the vehicle (15), wherein the storage structure (1) comprises at least one fastening device, via which the storage body (2) can be attached to an vehicle interior wall (16) of the vehicle (15) in the direction of movement (B), **characterized in that** the fastening device comprises at least one fastener with which a tensile force and/or compressive force can be exerted on the storage body (2) in an adjustable manner in order to attach the storage body (2) to the vehicle interior wall (16).

2. The storage structure (1) according to Claim 1, **characterized in that** the fastening device comprises a traction mechanism (9) to clamp the storage body (2) using the traction mechanism (9) to the vehicle interior wall (16).

3. The storage structure (1) according to Claim 2, **characterized in that** the fastening device comprises a traction mechanism adjustment device by means of which an insert length of the traction mechanism (9) can be varied or adjustable in order to clamp the storage body with the traction mechanism (9) to the vehicle interior wall (16).

4. The storage structure (1) according to any one of the Claims 1 to 3, **characterized in that** the fastening device comprises at least one spring element (11) in order to attach the storage body (2) to the vehicle interior wall (16) biased with a spring force of the spring element (11) or to clamp it to the vehicle interior wall (16) so that a limited movement of the storage body (2) in the direction of movement (B) against the spring force is possible.

5. The storage structure (1) according to Claims 2 and 4, **characterized in that** the traction mechanism (9) is applied to the spring force of the spring element (11).

6. The storage structure (1) according to Claim 4 or 5, **characterized in that** the fastening device comprises an operating device by means of which the spring force can be adjusted.

7. The storage structure (1) according to Claim 6, **characterized in that** a deflection of the spring element (11) can be changed by means of the operating device in order to adjust the spring force.

8. The storage structure (1) according to Claims 5 and 7, **characterized in that** the operating device is designed to adjust a tensile stress of the traction mechanism (9) in the fastening state in order to change the deflection of the spring element (11).

9. The storage structure (1) according to any one of the Claims 5 to 8, **characterized in that** the spring element (11) is formed using a helical spring, wherein separators are arranged between windings of the helical spring to prevent immediately adjacent windings from colliding with one another.

10. The storage structure (1) according to any one of the Claims 1 to 9, **characterized in that** the storage structure (1) comprises at least one spacer element which can be arranged between the storage body (2) and the vehicle interior wall (16) in the state of use so that the storage body (2) can be pressed against the spacer element in the fastening state.

11. The storage structure (1) according to Claim 10, **characterized in that** the spacer element comprises a fixing device by means of which the spacer element can be magnetically attached to the storage body (2) or the vehicle interior wall (16).

12. The storage structure (1) according to any one of the Claims 1 to 11, **characterized in that** the storage body (2) comprises at least one awning (17) with an awning roof (18), wherein the awning roof (18) is movable, in particular, being extendable, connected to the superstructure relative to a superstructure of the storage body (2) forming the storage surface (4).

13. The storage structure (1) according to any one of the Claims 1 to 12, **characterized in that** the storage body (2) comprises a table designed with a table top, wherein the table top is arranged on the superstructure in a reversible manner, in particular, being lowerable, relative to a residual body of the storage body (2) forming the storage surface (4).

14. Vehicle (15) comprising a storage structure (1) according to any one of the Claims 1 to 13, wherein the storage structure (1) with the lifting device hanging in the vehicle (15) is arranged in a movable manner relative to the vehicle (15) in one direction of movement (B), wherein the storage structure (1) can be attached or fastened to a vehicle interior wall (16) of the vehicle (15) with the fastening device in the direction of movement (B), **characterized in that** the fastening device comprises at least one fastener with which a tensile force and/or compressive force can be exerted on the storage body (2) in an adjustable manner in order to attach the storage body (2) to the vehicle interior wall (16).

15. The vehicle (15) according to Claim 14, **characterized in that** the storage body (2) comprises at least one awning (17) according to Claim 12, wherein the awning (17) can be moved through an open door of the vehicle (15), in particular, being extendable.

## Revendications

1. Structure de dépose (1), notamment structure de lit, destinée à un véhicule (15), tel qu'un camping-car, comportant un corps de dépose (2) pourvu d'une surface de dépose (4) pour déposer une cargaison ou une personne sur la surface de dépose (4) et d'au moins un dispositif de levage, à l'aide duquel le corps de dépose (2) peut être placé en en étant accroché dans le véhicule (15), de manière déplaçable dans une direction de déplacement (B) par rapport au véhicule (15), la structure de dépose (1) comportant au moins un système de fixation, à l'aide duquel le corps de dépose (2) peut se fixer dans la direction de déplacement (B) sur une paroi interne (16) du véhicule (15), **caractérisée en ce que** le système de fixation comporte au moins un moyen de fixation, à l'aide duquel une force de traction et / ou une force de pression peut être exercée de manière réglable sur le corps de dépose (2), pour fixer le corps de dépose (2) sur la paroi interne (16).

2. Structure de dépose (1) selon la revendication 1, **caractérisée en ce que** le système de fixation comporte un moyen de traction (9), destiné à serrer le corps de dépose (2) sur la paroi interne (16) à l'aide du moyen de traction (9).

3. Structure de dépose (1) selon la revendication 2, **caractérisée en ce que** le système de fixation comporte un dispositif de réglage du moyen de traction, permettant de faire varier ou de régler une longueur utile du moyen de traction (9), pour serrer le corps de dépose sur la paroi interne (16) à l'aide du moyen de traction (9).

4. Structure de dépose (1) selon l'une quelconque des revendications 1 à 3, **caractérisée en ce que** le système de fixation comporte au moins un élément à ressort (11), permettant de fixer le corps de dépose (2) contraint par la force de ressort de l'élément à ressort (11) sur la paroi interne (16) ou de le serrer sur la paroi interne (16), de telle sorte qu'un déplacement du corps de dépose (2) dans la direction de déplacement (B) à l'encontre de la force du ressort soit possible de manière limitée.

5. Structure de dépose (1) selon la revendication 2 et 4, **caractérisée en ce que** le moyen de traction (9) est soumis à la force de ressort de l'élément à ressort (11).

6. Structure de dépose (1) selon la revendication 4 ou 5, **caractérisée en ce que** le système de fixation comporte un dispositif de manipulation, à l'aide duquel la force du ressort est réglable.

7. Structure de dépose (1) selon la revendication 6, **caractérisée en ce qu'**à l'aide du dispositif de manipulation, une déviation de l'élément à ressort (11) est modifiable, pour régler la force du ressort.

8. Structure de dépose (1) selon la revendication 5 et 7, **caractérisée en ce que** le dispositif de manipulation est conçu pour régler, en position fixée un effort de traction du moyen de traction (9), pour modifier la déviation de l'élément à ressort (11).

9. Structure de dépose (1) selon l'une quelconque des revendications 5 à 8, **caractérisée en ce que** l'élément à ressort (11) est conçu avec une vis hélicoïdale, entre des spires de la vis hélicoïdale étant placées des pièces séparatrices, pour empêcher que des spires directement voisines n'entrent en collision.

10. Structure de dépose (1) selon l'une quelconque des revendications 1 à 9, **caractérisée en ce que** la structure de dépose (1) comporte au moins un élément d'écartement, lequel en position d'utilisation peut se placer entre le corps de dépose (2) et la paroi interne (16), de telle sorte qu'en position fixée, le corps de dépose (2) puisse être pressé contre l'élément d'écartement.

11. Structure de dépose (1) selon la revendication 10, **caractérisée en ce que** l'élément d'écartement comporte un système de fixation, à l'aide duquel l'élément d'écartement peut se fixer magnétiquement sur le corps de dépose (2) ou sur la paroi interne (16).

12. Structure de dépose (1) selon l'une quelconque des revendications 1 à 11, **caractérisée en ce que** le corps de dépose (2) comporte au moins un auvent (17) avec un toit d'auvent (18), le toit d'auvent (18) étant relié de manière déplaçable, notamment déployable par rapport à une superstructure du corps de dépose (2) constituant la surface de dépose (4) avec la superstructure.

13. Structure de dépose (1) selon l'une quelconque des revendications 1 à 12, **caractérisée en ce que** le corps de dépose (2) comporte une table constituée par un plateau de table, le plateau de table étant placé sur la superstructure en étant déplaçable de manière réversible, notamment abaissable par rapport à un corps résiduel du corps de dépose (2) constituant la surface de dépose (4).

14. Véhicule (15), pourvu d'une structure de dépose (1) selon l'une quelconque des revendications 1 à 13, la structure de dépose (1) étant placée avec le dispositif de levage de manière mobile par rapport au véhicule (15) dans une direction de déplacement (B), en étant accrochée dans le véhicule (15),
la structure de dépose (1) pouvant se fixer ou étant fixée avec le système de fixation dans la direction de déplacement (B) sur une paroi interne (16) du véhicule (15), **caractérisée en ce que** le système de fixation comporte au moins un moyen de fixation, avec lequel une force de traction et / ou une force de pression peut être exercée de manière réglable sur le corps de dépose (2), pour fixer le corps de dépose (2) sur la paroi interne (16).

15. Véhicule (15) selon la revendication 14, **caractérisée en ce que** le corps de dépose (2) comporte au moins un auvent (17) selon la revendication 12, l'auvent (17) pouvant se déplacer, notamment se déployer à travers une porte ouverte du véhicule (15).
